# EUROPÄISCHE PATENTANMELDUNG

(11) **EP 1 174 664 A2**
(43) Veröffentlichungstag der Anmeldung: **23.01.2002**
(21) Anmeldenummer: 01117315.0
(22) Anmeldetag: 18.07.2001
(51) Int. Cl.: F24J 2/42

(54) **Verfahren zum Betreiben einer Solartechnischen Anlage und Solartechnischen Anlage**

(30) Priorität: 21.07.2000 DE 10035916
(71) Anmelder: Grüterich, Heinz, 99100 Gierstadt (DE); Schneider, Gunter, 99100 Grossfahner (DE)
(72) Erfinder: Grüterich, Heinz, 99100 Gierstädt (DE); Schneider, Gunter, 99100 Grossfahren (DE)
(74) Vertreter: Liedtke, Klaus, Dr.

(57) **Zusammenfassung**

Verfahren zum Betreiben einer solartechnischen Anlage, bei dem ein in Solarpaneelen (4) erwärmtes Medium über eine Pumpe (5) zu einem Wärmetauscher (7) gelangt, wobei das erwärmte Medium bei erhöhten Außentemperaturen auf eine Verflüssigerbaugruppe (3) geleitet wird, die Bestandteil einer Kälteanlage (2) ist und sich in der Leitung zur Führung des erwärmten Mediums von den Solarpaneelen (4) zu einem Wärmetauscher eine Umschalteinrichtung befindet, die mit einer Verflüssigerbaugruppe (3) verbunden ist, die Bestandteil einer Kälteanlage (2) ist.

## Beschreibung

Die Erfindung betrifft ein Verfahren zum Betreiben einer solartechnischen Anlage, bei dem ein in Solarpaneelen erwärmtes Medium über eine Pumpe zu einem Wärmetauscher gelangt, und eine solartechnische Anlage.

Im Stand der Technik sind solartechnische Anlagen in vielfältigen Ausführungsformen bekannt. Bei den bekannten Anordnungen ist nachteilig, dass die aufzunehmenden Solarenergie begrenzt wird, weil bei hohen Außentemperaturen und Sonneneinstrahlungen die Energie nicht aufgenommen werden kann, so dass die erzeugten hohen Temperaturen zu Überhitzungen oder sogar zur Zerstörung der Anlage führen kann.

Der Erfindung liegt die Aufgabe eine solartechnische Anlage und ein Verfahren zum Betreiben einer solchen Anlage anzugeben, die es ermöglicht eine große Wärmemenge zu erzeugen, ohne dass bei hoher Sonneneinstrahlung eine thermische Überlastung der Anlage eintreten kann.

Erfindungsgemäß wird die Aufgabe mit einem Verfahren, welches die in Anspruch 1 angegebenen Merkmale und einer Vorrichtung, welche die in Anspruch 2 angegebenen Merkmale enthält, gelöst.

Vorteilhafte Ausgestaltungen sind in den Unteransprüchen angegeben.

Die erfindungsgemäße Anlage weist gegenüber konventionellen thermischen Solaranlagen deutlich vergrößerte thermischen Solarflächen auf und ist mit einer Kühleinrichtung verbunden. Damit ist es möglich, in der Übergangszeit die Wärmenutzung gegenüber konventionellen Anlagen deutlich zu steigern und im Sommer die überschüssige Wärmeleistung zur Kühlung zu verwenden.

Die Erfindung wird im folgenden anhand eines Ausführungsbeispiels näher erläutert.

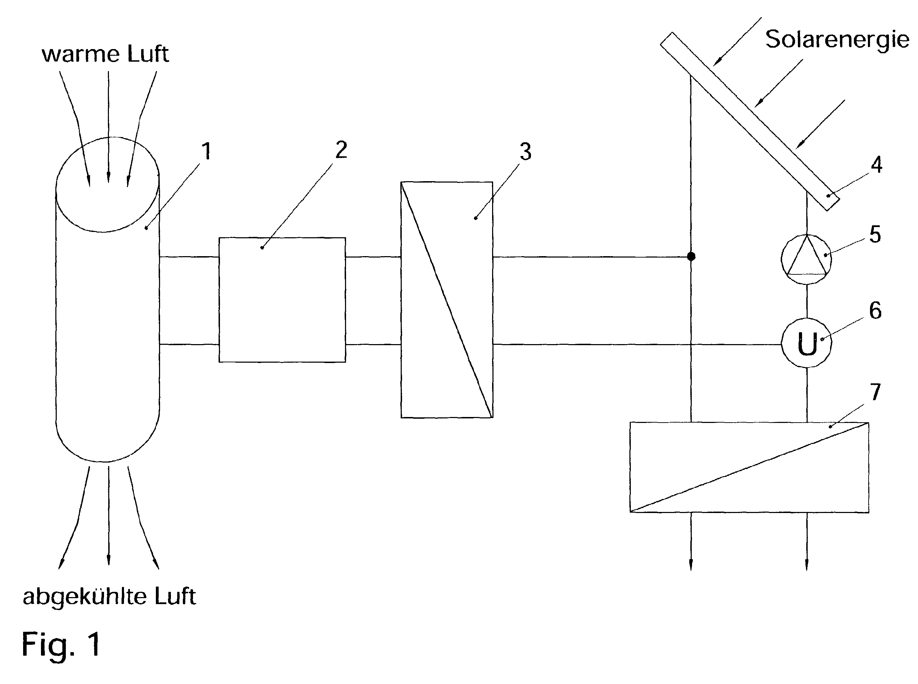

Die zugehörige Zeichnung zeigt in Figur 1 eine schematische Darstellung der Anordnung zur solarthermischen Energienutzung für Heizungs- und Kühlzwecke.

Die Solarenergie erwärmt in bekannter Weise Solarpaneele 4, von denen die erwärmte Wärmeträgerflüssigkeit über eine Pumpe 5 zur Umschalteinrichtung 6 gelangt. Bei niedrigen Außen- und Raumtemperaturen, wird die erwärmte Flüssigkeit zum Wärmetauscher 7 geführt, von dem die Wärme auf eine Heiz- und/oder Warmwassererzeugereinrichtung geleitet wird. Der Wärmetauscher 7 ist als Platten- oder Röhrbündelwärmetauscher ausgebildet. Damit erfolgt die Nutzung der Solarwärme für die Brauchwarmwasser- bzw. Raumwärmenutzung.

Bei erhöhten Außentemperaturen schaltet die Umschalteinrichtung 6 den Flüssigkeitsstrom um, so dass die Solarenergie auf die Verflüssigerbaugruppe 3 geleitet wird, die Bestandteil einer Kälteanlage 2 ist. Hierfür kann eine Absorptionskälteanlage oder eine Wärmepumpstation vorgesehen werden. Die Anlage verfügt über eine modifizierte Absorptionskälte- /Wärmepumpenstation mit spezieller Anpassung der Ein- und Ausgangsparameter des kältetechnischen Teils. In einem speziellen Luftwärmetauscher 1, der im dargestellten Fall in zylindrischer Anordnung ausgeführt und mit Kühlrippen versehen ist, wird die nach unten durchströmende Luft gekühlt und kann in den Wohn- oder Arbeitsbereich des Gebäudes geleitet werden. Zweckmäßiger Weise wird der Luftwärmetauscher 1 als Nachschalteinheit an einer Raumklimatisierungsanlage angeordnet.

Es ist auch möglich, anstelle des Luftwärmetauschers 1 einen Wärmetauscher für flüssige Medien mit den zugehörigen Anordnungen zu verwenden. Dieser ist an das jeweilige modifizierte Absorptionskälte-/Wärmepumpenteils unter Berücksichtigung der thermischen Solartemperaturverhältnissen anzupassen.

Ein besonderer Vorteil der erfindungsgemäßen Anlage besteht darin, dass gegenüber konventionellen Anlagen deutlich vergrößerte thermische Solarflächen eingesetzt werden können, so dass eine größere Wärmemenge erzeugt und genutzt werden kann, ohne dass bei hohen Sonneneintrahlungen eine thermische Überlastung eintreten kann.

### BEZUGSZEICHENLISTE

- 1: Luftwärmetauscher
- 2: Kälteanlage
- 3: Verflüssigerbaugruppe
- 4: Solarpaneel
- 5: Pumpe
- 6: Umschalteinrichtung
- 7: Wärmetauscher für Wärme

## Patentansprüche

1. Verfahren zum Betreiben einer solartechnischen Anlage, bei dem ein in Solarpaneelen (4) erwärmtes Medium über eine Pumpe (5) zu einem Wärmetauscher (7) gelangt, **dadurch gekennzeichnet, dass** das erwärmte Medium bei erhöhten Außentemperaturen auf eine Verflüssigerbaugruppe (3) geleitet wird, die Bestandteil einer Kälteanlage (2) ist.

2. Solartechnischen Anlage zur Durchführung des Verfahrens nach Anspruch 1, **dadurch gekennzeichnet, dass** sich in der Leitung zur Führung des erwärmten Mediums von den Solarpaneelen (4) zu einem Wärmetauscher (7) eine Umschalteinrichtung (6) befindet, die mit einer Verflüssigerbaugruppe (3) verbunden ist, die Bestandteil einer Kälteanlage (2) ist.

3. Solartechnischen Anlage nach Anspruch 2, **dadurch gekennzeichnet, dass** die Kälteanlage (2) mit einem Luft wärmetauscher (1) verbunden ist.

4. Solartechnischen Anlage nach Anspruch 3, **dadurch gekennzeichnet, dass** der Luftwärmetauscher (1) zylindrisch ausgebildet und mit Kühlrippen versehen ist.

5. Solartechnischen Anlage nach Anspruch 3 oder 4, **dadurch gekennzeichnet, dass** der Luftwärmetauscher (1) als Nachschalteinheit an einer Raumklimatisierungsanlage angeordnet.

6. Solartechnischen Anlage nach einem der Ansprüche 2 bis 5, **dadurch gekennzeichnet, dass** die Solarkollektoren (4) gegenüber konventionellen Anlagen deutlich vergrößerte Solarflächen aufweisen.
